# EUROPÄISCHE PATENTSCHRIFT

(11) **EP 3 001 137 B1**
(45) Veröffentlichungstag und Bekanntmachung des Hinweises auf die Patenterteilung: **24.03.2021**
(21) Anmeldenummer: 15002762.1
(22) Anmeldetag: 24.09.2015
(51) Int. Cl.: G01B 11/00, G06T 5/00, G06T 7/00

(54) **VERFAHREN ZUR ÜBERWACHUNG EINER KALIBRIERUNG MEHRERER UMGEBUNGSSENSOREN EINES KRAFTFAHRZEUGS UND KRAFTFAHRZEUG**
METHOD FOR MONITORING A CALIBRATION OF MULTIPLE ENVIRONMENT SENSORS OF A MOTOR VEHICLE AND MOTOR VEHICLE
PROCEDE DE SURVEILLANCE D'UN ETALONNAGE DE PLUSIEURS CAPTEURS D'ENVIRONNEMENT D'UN VEHICULE AUTOMOBILE ET VEHICULE AUTOMOBILE

(30) Priorität: 25.09.2014 DE 102014014295
(43) Veröffentlichungstag der Anmeldung: 30.03.2016
(73) Patentinhaber: AUDI AG, 85045 Ingolstadt (DE)
(72) Erfinder: Kubertschak, Tim, 85055 Ingolstadt (DE); Schmitt, Nicholas, 85049 Ingolstadt (DE)
(74) Vertreter: Thielmann, Frank

(56) Entgegenhaltungen:
- EP-A1- 1 376 051
- EP-A1- 2 530 647
- DE-A1-102004 056 669

## Beschreibung

Die Erfindung betrifft ein Verfahren zur Überwachung mehrerer, Sensordaten aus der Umgebung eines Kraftfahrzeugs aufnehmender, an einer durch extrinsische Kalibrierungsparameter beschriebenen Verbauposition im Kraftfahrzeug verbauter Umgebungssensoren bezüglich der extrinsischen Kalibrierungsparameter sowie ein Kraftfahrzeug.

Aktuelle und zukünftige Kraftfahrzeuge sind meist mit einer Vielzahl von Fahrzeugsystemen, beispielsweise Fahrerassistenzsystemen und/oder Sicherheitssystemen, versehen, die die Sensordaten einer Mehrzahl von Umgebungssensoren des Kraftfahrzeugs auswerten. Derartige Fahrerassistenzsysteme realisieren Funktionen, die dem Fahrer in verschiedenen Fahrsituationen Unterstützung bieten. Beispielhaft genannt seien hierzu Ausweich- und Parkassistenten, abstandsadaptive Regler für die Längsführung des Kraftfahrzeugs (ACC - Adaptive Cruise Control), Querführungssysteme wie beispielsweise Spurhaltesysteme oder Spurverlassungswarner und dergleichen. Jedes dieser Fahrerassistenzsysteme und sonstigen Fahrzeugsysteme ist für eine korrekte Funktionsweise auf exakte Sensorinformationen im Rahmen der physikalisch bedingten Untersicherheiten angewiesen.

Um die geforderte Genauigkeit seitens der Umgebungssensoren zu gewährleisten, ist es bekannt, die Umgebungssensoren bezüglich der Verbauposition im Kraftfahrzeug und ihrer Erfassungsbereiche exakt zu kalibrieren. Das bedeutet, es werden extrinsische Kalibrierungsparameter erfasst, die die Verbauposition und mithin auch den Erfassungsbereich beschreiben, nachdem die Verbauposition auch die Orientierung des jeweiligen Umgebungssensors angibt. Diese Kalibrierung geschieht im Allgemeinen für jeden Umgebungssensor während der Produktion des Kraftfahrzeugs.

Problematisch hierbei ist jedoch, dass im Verlauf der Lebensdauer des Kraftfahrzeugs aufgrund unterschiedlicher Einflüsse eine Dekalibrierung der Umgebungssensoren im Hinblick auf die extrinsischen Kalibrierungsparameter, die von den Auswerteeinheiten der Umgebungssensoren selbst und/oder den Auswerteeinheiten der Fahrzeugsysteme genutzt werden, auftreten kann. Zu diesen Einflüssen zählen unter anderem geometrische Änderungen der Sensorausrichtung, beispielsweise aufgrund von Setzverhalten oder Unfällen, oder Umwelteinflüsse wie Steinschlag, Betauung oder Verschmutzung. Hierdurch kann es zu einem Verlust der notwendigen Genauigkeit, die gefordert ist, kommen, wodurch jegliche Funktion eines Fahrzeugsystems, insbesondere jegliche Fahrerassistenzfunktion, eine Degradation ihrer Funktionalität erfährt.

EP 2 530 647 A1 betrifft ein Verfahren zur Kalibrierung eines Sichtsystems für ein Fahrzeug, für das mehrere Bildsensoren verwendet werden. Um das Sichtsystem zu kalibrieren, werden Bilder einer Mehrzahl von Objekten aufgenommen, wobei eine Position und Orientierung des Bildsensors relativ zu der Mehrzahl von Objekten basierend auf einem aufgenommenen Bild bestimmt werden kann. Eine Position und Orientierung der weiteren Bildsensoren wird ebenso bestimmt, so dass sich eine relative Position und Orientierung zwischen den Bildsensoren ergibt.

DE 10 2004 056 669 A1 offenbart eine Einrichtung für die Kalibrierung eines Bildsensorsystems in einem Kraftfahrzeug, die ein bordeigenes Kalibrierobjekt, das beispielsweise an der Motorhaube des Fahrzeugs angeordnet ist, umfasst.

EP 1 376 051 A1 betrifft die Kalibrierung eines Bildsensorsystems bei einem Kraftfahrzeug, wobei als Kalibrierobjekte speziell ausgestaltete Marker verwendet werden, die entweder wenigstens ein Kalibrierbezugsmerkmal aufweisen oder aber ein Testfeld sind.

Der Erfindung liegt daher die Aufgabe zugrunde, eine Möglichkeit zur Überwachung und idealerweise auch Nachführung der extrinsischen Kalibrierung einer Mehrzahl von Umgebungssensoren in einem Kraftfahrzeug anzugeben.

Zur Lösung dieser Aufgabe sind bei einem Verfahren der eingangs genannten Art erfindungsgemäß die Merkmale des Anspruchs 1 vorgesehen.

Die der Erfindung zugrunde liegende Idee ist es also, Sensordaten unterschiedlicher Umgebungssensoren, die dasselbe Merkmal der Umgebung in derselben Eigenschaft beschreiben, gegeneinander zu plausibilisieren, um bei einem insbesondere über mehrere Zeitschritte und/oder bezüglich mehrerer anderer Umgebungssensoren nicht plausiblen Sensordatum auf eine Dekalibrierung schließen zu können. Es wird dabei direkt oder indirekt ein Vergleich durchgeführt, das bedeutet, die Unterschiede zwischen den Sensordaten unterschiedlicher Sensoren, die dasselbe Merkmal in derselben Eigenschaft beschreiben, werden analysiert, insbesondere mittels wenigstens eines Schwellwerts bewertet. Liegt eine zu starke Abweichung vor, ist dies ein Anzeichen für eine Dekalibrierung. Letztlich wird also die aktuelle Kalibrierung aller Umgebungssensoren untereinander ständig überprüft, so dass bei erkannter Dekalibrierung je nach Ausbaustufe unterschiedliche Maßnahmen vorgenommen werden können.

Dabei wird das Verfahren bevorzugt vollautomatisch durch ein Steuergerät des Kraftfahrzeugs durchgeführt, welches entweder als eigenständiges Steuergerät vorgesehen sein kann, als Teil eines kompletten Steuergeräteverbundes oder aber in andere Steuergeräte integriert sein kann. Alle Umgebungssensoren stellen dem Steuergerät ihre aktuellen Messungen, also die aktuellen Sensordaten, bereit. Dabei kann die Bereitstellung auf unterschiedlichen Wegen erfolgen, beispielsweise unmittelbar über private Bus-Verbindungen, indirekt über den zentralen Fahrzeugbus (beispielsweise CAN, LIN, FlexRay, Ethernet und dergleichen), wobei auch eine Kommunikation über drahtlose Verbindungen (WLAN, GSM, etc.), sonstige diskrete Verbindungen oder über Steuergeräte-interne Bussysteme denkbar ist.

Um die Sensordaten vergleichen zu können, werden die bisherigen extrinsischen Kalibrierungsparameter genutzt, um eine Registrierung von Sensordaten unterschiedlicher Umgebungssensoren zu erlauben und mithin schlusszufolgern, dass dasselbe Umgebungsmerkmal dargestellt wird. Dabei handelt es sich bei der betrachteten Eigenschaft des Merkmals bevorzugt um seine Position, die in unmittelbarem Zusammenhang mit der extrinsischen Kalibrierung der Sensoren steht; hier lässt sich mithin besonders deutlich eine Dekalibrierung erkennen. Allgemein wird beim hier vorgestellten Verfahren ausgenutzt, dass sich die Erfassungsbereiche unterschiedlicher Umgebungssensoren häufig überschneiden, mithin Merkmale der Umgebung durch verschiedene Umgebungssensoren erfasst werden, so dass der hier beschriebene Vergleich möglich ist. Im Rahmen einer vollständigen Kalibrierungsüberprüfung werden dabei mithin Kandidatenmerkmale in der Umgebung des Kraftfahrzeugs, die in den Sensordaten enthalten sind, aufgefunden, wobei dann für jedes derartige Kandidatenmerkmal eine Auswertung des wenigstens einen Dekalibrierungskriteriums erfolgen kann, um eine möglichst breite Basis zur Beurteilung einer Dekalibrierung zu haben. Wird beispielsweise eine Anzahl von Merkmalen von zwei Radarsensoren und einer Kamera, insbesondere auch einer Time-of-Flight-Kamera erfasst, werden die Sensordaten für jedes dieser Anzahl von Merkmalen im Dekalibrierungskriterium verglichen bzw. auf ihre Abweichungen voneinander untersucht. Dies gilt entsprechend für andere Merkmale in Überlappungsbereichen anderer Umgebungssensoren. Hierdurch entsteht bereits eine statistische Grundlage, die selbstverständlich auch zeitlich geschaffen werden kann, worauf im Folgenden noch näher eingegangen werden wird.

Somit ist durch das erfindungsgemäße Verfahren eine sichere und nachvollziehbare Überprüfung der aktuell verwendeten extrinsischen Kalibrierungsparameter möglich, welche insbesondere bei Auswertungen in Auswerteeinheiten, die in Umgebungssensoren selbst und/oder in Steuergeräten angeordnet sein können, verwendet werden. Durch diese Überprüfung, die vorteilhaft wenigstens einmal für jede Fahrt mit dem Kraftfahrzeug durchgeführt wird, kann schnell auf auftretende Dekalibrierungen, beispielsweise Positions- oder Ausrichtungsveränderungen eines Umgebungssensors, reagiert werden.

Die vorliegende Erfindung sieht vor, dass durch das Dekalibrierungskriterium auch ein Messfehler der jeweiligen Sensordaten ausgewertet wird. Viele moderne Umgebungssensoren liefern neben den eigentlichen Messwerten auch abgeschätzte Messfehler für diese Messwerte bereits mit, welche Anzeichen für die intrinsische Ungenauigkeit der Sensordaten darstellen und mithin bei der Auswertung des Dekalibrierungskriteriums berücksichtigt werden können, insbesondere hinsichtlich betrachteter Schwellwerte. Beispielsweise kann die Überprüfung des Dekalibrierungskriteriums dahingehend ausgeführt sein, dass überwacht wird, ob Sensordaten soweit voneinander entfernt liegen, dass nicht einmal mehr ein Überlapp zwischen ihren Messfehlerbereichen bzw. abhängig von den Messfehlern definierten Bereichen besteht. Andererseits können die Sensordaten selbst auch als verschmiert angenommen werden, wobei sich der Grad der Verschmierung aus dem Messfehler ergeben kann.

Wie bereits erwähnt, ist es besonders vorteilhaft, dass durch das Dekalibrierungskriterium in den Sensordaten enthaltene Positionsdaten des Merkmals verglichen werden. Eine Veränderung in der Verbauposition eines Umgebungssensors, die auch dessen Orientierung erfasst, bildet sich unmittelbar in einer Verschiebung der aus den Sensordaten folgenden bzw. in diesen enthaltenen Position ab. Daher bieten Positionsdaten von Umgebungsmerkmalen einen hervorragenden Ausgangspunkt für die Analyse hinsichtlich einer Dekalibrierung.

In einer konkreten Ausgestaltung der Erfindung kann vorgesehen sein, dass Merkmale der Umgebung mit ihren gemäß den Sensordaten gemessenen Positionsdaten in eine Umgebungskarte eingetragen werden, die durch das Dekalibrierungskriterium ausgewertet wird. Während Umgebungskarten bzw. Umfeldkarten für die Sensorfusion bei Kraftfahrzeugen bereits vorgeschlagen wurden, wird für derartige, von Funktionen von Fahrzeugsystemen genutzte Umgebungsmodelle meist auch eine Fusion der Positionen durchgeführt, während die durch das Kalibrierungskriterium ausgewertete Umgebungskarte die Sensordaten der einzelne Umgebungssensoren zu Merkmalen der Umgebung weiterhin unterscheidbar enthält. Es ist mithin ein kartenbasierter Ansatz gegeben, bei dem alle Umgebungssensormessungen unter folgender Annahme in ein hochaufgelöstes Grid eingetragen werden: Falls alle Umgebungssensoren korrekt kalibriert sind und dasselbe Merkmal im Erfassungsbereich der Umgebungssensoren auftaucht, lassen sich die Sensordaten mit relativ scharfen Kanten in die Karte eintragen. Bei einer Dekalibrierung einzelner Umgebungssensoren verschmieren die kartierten Umgebungssensormessungen und der Bereich, in dem die Sensordaten, hier Positionsdaten, vorliegen, wird insgesamt größer, was in einem Ausführungsbeispiel auch unmittelbar ausgewertet werden kann. Denkbar ist es jedoch zudem, die Umgebungskarte als eine Art dedizierte Datenbank vorzuhalten, aus der beispielsweise Abstandsmaße zwischen Sensordaten unterschiedlicher Umgebungssensoren ermittelt werden können und dergleichen.

IErfindungsgemäß ist zur konkreten Ausgestaltung des Dekalibrierungskriteriums vorgesehen, dass durch das Dekalibrierungskriterium überprüft wird, ob die Sensordaten aller ein Merkmal erfassender Umgebungssensoren innerhalb einer durch wenigstens eine Ausdehnungsgröße, die von den jeweiligen Sensordaten zugeordneten Messfehlern der Sensordaten abhängig ist, beschriebenen Referenzumgebung im Parameterraum liegen. In dieser Ausgestaltung ist es besonders zweckmäßig, wenn für jeden individuellen Messwert in den Sensordaten der unterschiedlichen Umgebungssensoren auch der entsprechend zugeordnete Messfehler berücksichtigt wird, mithin jeder Sensordatensatz eines Umgebungssensors bereits eine ähnliche Ausdehnung im Parameterraum, beispielsweise bei Positionsdaten im Ortsraum, besitzt. Es wird nun, beispielsweise in Form einer Ellipse, eines Kreises oder eines Quaders eine Umgebung im Parameterraum definiert, die die Sensordaten aller Umgebungssensoren, die dieses Umgebungsmerkmal betreffen, enthält. Der Parameterraum wird folglich von den Eigenschaften aufgespannt, insbesondere also der Position, die bezüglich des Umgebungsmerkmals betrachtet werden. Die Umgebung beschreibt also letztlich die Streuung der Sensordaten der verschiedenen Umgebungssensoren. Wie groß die zulässige Streuung sein darf, um noch von einer korrekten Kalibrierung auszugehen, kann anhand der Messfehler, die den Sensordaten zugeordnet sind, festgelegt werden, wodurch letztlich eine Referenzumgebung mit Referenzausdehnungsgrößen definiert wird, die die Umgebung, die alle Sensordaten umfasst, nicht überschreiten soll, wobei bei Überschreitung wenigstens ein Hinweis gegeben ist, dass eine Dekalibrierung vorliegt. Denn bei einer Dekalibrierung einzelner Sensoren "verschmieren" sozusagen die insbesondere kartierten Sensormessungen und die Umgebung wird größer, wobei die Größenänderung durch das Dekalibrierungskriterium detektiert wird.

Ergänzend kann vorgesehen sein, dass durch das Dekalibrierungskriterium ein Abstandsmaß zwischen den Sensordaten zweier Umgebungssensoren für alle Paare von ein Merkmal erfassenden Sensoren ermittelt und mit einem insbesondere von den Sensordaten zugeordneten Messfehlern abhängigen Schwellwert verglichen wird. In dieser Variante werden also Abstandsmaße von Paaren von Sensordaten unterschiedlicher Sensoren betrachtet, wobei bevorzugt dieses Abstandsmaß einen von den Messfehlern abhängigen Schwellwert nicht überschreiten darf, da ansonsten zumindest ein Hinweis auf eine Dekalibrierung gegeben ist. Eine derartige Vorgehensweise erleichtert es, falls vorgesehen, einen Umgebungssensor zu identifizieren, der konkret dekalibriert ist, da dann häufig bei allen jeweiligen Paaren, die diesen Umgebungssensor betreffen, die Überschreitung des Schwellwerts auftritt.

Das erfindungsgemäße Verfahren zur Überprüfung der Kalibrierung wird bevorzugt bei stehendem Kraftfahrzeug durchgeführt. Dabei kann vorgesehen sein, dass bei stehenden Kraftfahrzeug im Stand aufgenommene Sensordaten und/oder für eine Bewegung des Kraftfahrzeugs benötigende Umgebungssensoren unmittelbar vor dem Stand aufgenommene Sensordaten ausgewertet werden. Diese bevorzugte Ausgestaltung begründet sich darin, dass üblicherweise nicht alle Umgebungssensoren gleich getaktet sind, mithin zum exakt selben Zeitpunkt Sensordaten liefern. Umgebungsmerkmale sollten sich jedoch während der Aufnahme von Sensordaten, die durch das Dekalibrierungskriterium ausgewertet wurden, nicht verändern, so dass bei stehendem Kraftfahrzeug gemessen wird. In diesem Fall sind es feststehende Objekte, deren Merkmale durch die Umgebungssensoren detektiert werden. Es existieren jedoch auch Sensormessprinzipien, die ein bewegtes Kraftfahrzeug voraussetzen, so dass für derartige Umgebungssensoren vorgesehen sein kann, die Sensordaten für die letzten Zeitpunkte vor dem Stillstand des Kraftfahrzeugs in einer Speichereinrichtung vorzuhalten und zur Überwachung der Dekalibrierung zu verwenden.

Grundsätzlich ist es jedoch auch denkbar, eine Ausgestaltung vorzusehen, bei der bei einem bewegten Kraftfahrzeug gleichzeitig aufgenommene Sensordaten ausgewertet werden. Soll mithin die Überprüfung der Kalibrierung bei bewegtem Kraftfahrzeug stattfinden, sind Maßnahmen zu treffen, die sicherstellen, dass die Sensordaten, die durch das Dekalibrierungskriterium ausgewertet werden sollen, gleichzeitig aufgenommen würden.

Wie bereits erwähnt wurde, liegen üblicherweise mehrere Merkmale der Umgebung in überlappenden Erfassungsbereichen von Umgebungssensoren vor, so dass sich bereits in diesem Kontext eine statistische Bewertung der Dekalibrierungskriterien für alle diese unterschiedlichen Merkmale anbietet, mithin nicht jeder Ausreißer bzw. jede lokal fehlerhafte Messung bereits zur Feststellung einer Dekalibrierung führt. Beispielsweise können Schwellwerte vorgesehen sein, wie viele Dekalibrierungskriterium oder welcher Anteil der Dekalibrierungskriterien eine Dekalibrierung anzeigen müssen. Allerdings kann es auch vorkommen, dass ein kurzzeitiger, vorübergehender Fehler in einem Umgebungssensor vorliegt, so dass eine zweckmäßige Ausschaltung der vorliegenden Erfindung vorsieht, dass das Dekalibrierungskriterium für mehrere Zeitpunkte in einem insbesondere gleitenden Zeitfenster ausgewertet wird und zur Überwachung der Kalibrierung die zu den verschiedenen Zeitpunkten erhaltenen Dekalibrierungsinformationen der Dekalibrierungskriterien statistisch ausgewertet werden, insbesondere bei einer einen Schwellwert übersteigenden Anzahl von eine Dekalibrierung anzeigenden Dekalibrierungskriterien eine Dekalibrierung festgestellt wird. Auf diese Weise wird also die Detektion einer Dekalibrierung bei nur äußerst kurzzeitig auftretenden Messfehlern einzelner Umgebungssensoren möglichst vermieden, wobei auch andere Kriterien zur Feststellung einer tatsächlichen Dekalibrierung gegeben sein können, beispielsweise, wenn bezüglich eines Sensors wiederholt kurzzeitig eine Dekalibrierung angezeigt wurde, wobei dann die Zahl der für wenigstens einen Umgebungssensor aufgetretenen, eine die Dekalibrierung anzeigenden Dekalibrierungskriterien gezählt werden kann und dergleichen, was selbstverständlich auch für eine statistische Auswertung hinsichtlich unterschiedlicher Merkmale der Umgebung gelten kann.

Gerade dann, wenn die auszuwertenden Sensordaten bei stehendem Kraftfahrzeug erzeugt werden sollen, aber auch aufgrund der üblicherweise langsamen Veränderung von extrinsischen Kalibrierungsparametern bei Umgebungssensoren im Kraftfahrzeug, kann es zweckmäßig sein, wenn die Überprüfung auf Dekalibrierung nicht ständig durchgeführt wird, sondern bei Eintritt eines bestimmten Betriebskriteriums des Kraftfahrzeugs durchgeführt wird. Ein solches Betriebskriterium kann das Abschließen des Kraftfahrzeugs bei ausgeschaltetem Motor sein, so dass letztlich nach Abschluss jeder Fahrt mit dem Kraftfahrzeug eine Überprüfung der Kalibrierung stattfindet. Selbstverständlich sind auch andere Betriebskriterien denkbar, beispielsweise das Starten einer Überprüfung jedes Mal, wenn das Kraftfahrzeug zum Stillstand kommt und dergleichen.

Zweckmäßig ist es, wenn durch gemeinsame Auswertung einzelner Vergleiche des Dekalibrierungskriteriums und/oder eine Ausreißerdetektion und/oder durch Vergleich über mehrere Dekalibrierungskriterien ein dekalibrierter Umgebungssensor identifiziert wird. Werden beispielsweise Abstandsmaße der Sensordaten betrachtet, gibt die Beteiligung eines Umgebungssensors an allen eine Dekalibrierung anzeigenden Abstandsmaßen einen Hinweis darauf, dass dieser Umgebungssensor dekalibriert sein könnte, wenn Abstandsmaße zwischen Sensordaten anderer Umgebungssensoren auf einen kalibrierten Zustand hindeuten. Auch über die Betrachtung von mehreren Dekalibrierungskriterien lässt sich die Beteiligung eines bestimmten Sensors bei verschiedenen, Dekalibrierung anzeigenden Dekalibrierungskriterien feststellen. Auch eine Ausreißerdetektion ist nützlich, wenn wie beschrieben mit Umgebungen gearbeitet wird. Dann kann beispielsweise immer ein Umgebungssensor bei der Bestimmung der Umgebung ausgenommen werden und es kann überprüft werden, ob nur bei Vorhandensein eines bestimmten Umgebungssensors tatsächlich eine Referenzumgebung, die durch die Messfehler definiert ist, überschritten ist. Ersichtlich folgt aus vielen Arten der gemeinsamen Auswertung, welcher Umgebungssensor tatsächlich für die Hinweise auf die Kalibrierung verantwortlich, mithin wahrscheinlich dekalibriert ist. Diese Herangehensweise basiert auf der Beobachtung, dass üblicherweise nicht eine größere Zahl von Umgebungssensoren gleichzeitig auf gleiche Art dekalibriert wird.

Wie bereits erwähnt wurde, können bei Ermittlung einer Dekalibrierung Maßnahmen ergriffen werden, wobei bevorzugt bei Ermittlung einer Dekalibrierung wenigstens eines Umgebungssensors eine Hinweisinformation an einen Fahrer ausgegeben wird und/oder eine Rekalibrierung durch Ermittlung aktueller extrinsischer Kalibrierungsparameter durchgeführt wird. Auf eine erkannte Dekalibrierung von Sensoren kann je nach Ausbaustufe unterschiedlich reagiert werden. In der einfachsten Ausführung wird der Fahrer durch eine entsprechende Meldung, also Hinweisinformation, gewarnt, woraufhin er für eine korrekte Funktionsweise seiner Fahrzeugsysteme, insbesondere Fahrerassistenzsysteme, beispielsweise die nächste zertifizierte Werkstatt aufsuchen kann, um eine Rekalibrierung durchführen zu lassen.

Besonders zweckmäßig ist jedoch eine Ausgestaltung, in der vom erfindungsgemäßen Verfahren, konkret beispielsweise einem Steuergerät, eine Rekalibrierung der Umgebungssensoren angestoßen werden kann. Hierzu kann in besonders zweckmäßiger Ausgestaltung der Erfindung vorgesehen sein, dass die Rekalibrierung mittels einer Rekalibrierungseinrichtung durchgeführt wird, die wenigstens ein durch die zu rekalibrierenden Umgebungssensoren erfassbares Merkmal, das in fester geometrischer Beziehung zu dem Kraftfahrzeug steht, erzeugt und/oder zur Verfügung stellt. Seitens des Kraftfahrzeugs ist also eine aktivierbare und/oder grundsätzlich dauerhaft ein Merkmal zur Verfügung stellende Rekalibrierungseinrichtung vorgesehen, welche Merkmale umfasst und/oder erzeugt, deren Beziehung zum Kraftfahrzeug bekannt ist und deren Erfassung mithin erlaubt, aktualisierte extrinsische Kalibrierungsparameter zu vermessen. Dabei kann konkret vorgesehen sein, dass durch die Rekalibrierungseinrichtung ein detektierbares Objekt, insbesondere mittels eines Teleskopträgers, aus dem Kraftfahrzeug ausgefahren wird und/oder bei optischen Umgebungssensoren ein Rekalibrierungsmuster auf die Straße projiziert wird und/oder eine ein fest am Kraftfahrzeug angeordnetes, durch wenigstens einen Teil der zu rekalibrierenden Umgebungssensoren erfassbares Merkmal aufweisende Rekalibrierungseinrichtung verwendet wird. Mithin kann beispielsweise ein Referenzobjekt verwendet werden, das bevorzugt mittels einer Teleskopeinheit aus dem Kraftfahrzeug ausgefahren werden kann, ähnlich wie dies beispielsweise bereits für Anhängerkupplungen bekannt ist. Denkbar ist es jedoch auch, ein Lichtmuster als Rekalibrierungsmuster auf die Straße bzw. allgemein Fahrbahn zu projizieren, so das optische Umgebungssensoren rekalibriert werden können. Zur Ausgabe des Lichtmusters können beispielsweise die Scheinwerfer des Kraftfahrzeugs eingesetzt werden, mit welchen es auch möglich ist, beispielsweise ein Rekalibrierungsmuster an eine Wand oder dergleichen zu projizieren. Aufgrund der speziellen Form des Rekalibrierungsmusters ist eine Rekalibrierung, also eine Messung der extrinsischen Kalibrierungsparameter, möglich. Dabei sind selbstverständlich auch andere Ausgestaltungen für eine derartige Rekalibrierungseinrichtung denkbar.

Die im Rahmen der Rekalibrierung ermittelten extrinsischen Kalibrierungsparameter können dann beispielsweise zentral in dem Kraftfahrzeug abgespeichert werden, um im Weiteren von den Auswerteeinheiten, beispielsweise in den Sensoren und/oder den Fahrzeugsystemen, verwendet zu werden, wobei auch das Verfahren gemäß der vorliegenden Erfindung zweckmäßigerweise nun die neuen extrinsischen Kalibrierungsparameter für den wenigstens einen Umgebungssensor verwendet.

Es sei noch darauf hingewiesen, dass selbstverständlich zur Rekalibrierung auch grundsätzlich bekannte, ortsfeste Einrichtungen verwendet werden können, die im Stand der Technik grundsätzlich bekannt sind und zu denen das Kraftfahrzeug hingefahren werden muss. Dabei handelt es sich beispielsweise um infrastrukturelle Einrichtungen, welche eine definierte Umgebung zur Sensorkalibrierung bereitstellen.

Das erfindungsgemäße Verfahren kann für alle aktuell vorhandenen und gegebenenfalls zukünftigen Umgebungssensoren eingesetzt werden. So kann vorgesehen sein, dass als Umgebungssensoren wenigstens ein Ultraschallsensor und/oder wenigstens ein Radarsensor und/oder wenigstens ein Lasersensor und/oder wenigstens eine Kamera und/oder wenigstens ein PMD-Sensor verwendet werden. Auch andere Sensorarten sind denkbar.

Neben dem Verfahren betrifft die Erfindung auch ein Kraftfahrzeug mit mehreren, Sensordaten aus der Umgebung des Kraftfahrzeugs aufnehmenden, an einer durch extrinsische Kalibrierungsparameter beschriebenen Verbauposition im Kraftfahrzeug verbauten Umgebungssensoren, und wenigstens einer wenigstens einem Umgebungssensor zugeordneten, die Sensordaten des wenigstens einen zugeordneten Umgebungssensors unter Nutzung der Kalibrierungsparameter auswertenden Auswerteeinheit, welches sich dadurch auszeichnet, dass es eine Steuereinheit, insbesondere ein Steuergerät, aufweist, die zur Ermittlung einer Dekalibrierung wenigstens eines Umgebungssensors hinsichtlich der extrinsischen Kalibrierungsparameter aus einem Vergleich von dasselbe Merkmal der Umgebung beschreibenden Sensordaten unterschiedlicher Umgebungssensoren ausgebildet ist, wobei die Steuereinheit zur Durchführung des erfindungsgemäßen Verfahrens ausgebildet ist. Sämtliche Ausführungen bezüglich des erfindungsgemäßen Verfahrens lassen sich mithin analog auf das erfindungsgemäße Kraftfahrzeug übertragen, mit welchem mithin die bereits genannten Vorteile ebenso erhalten werden können. Insbesondere ist es möglich und zweckmäßig, das erfindungsgemäße Kraftfahrzeug mit einer Rekalibrierungseinrichtung zur Rekalibrierung von dekalibrierten Umgebungssensoren auszustatten.

Wie bereits erwähnt, ist die Steuereinheit bevorzugt Teil eines Steuergeräts und/oder als wenigstens ein Steuergerät realisiert. Die Sensordaten der Umgebungssensoren werden an die Steuereinheit bzw. das entsprechende Steuergerät weitergeleitet, wozu verschiedenste Arten von Verbindungen eingesetzt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: Umgebungssensoren eines Kraftfahrzeugs mit Erfassungsbereichen,
- Fig. 3: Positionsdaten mehrerer Umgebungssensoren im kalibrierten Fall,
- Fig. 4: Positionsdaten mehrerer Umgebungssensoren im nicht kalibrierten Fall,
- Fig. 5: eine Einrichtung zur Rekalibrierung, und
- Fig. 6: eine Prinzipskizze eines erfindungsgemäßen Kraftfahrzeugs.

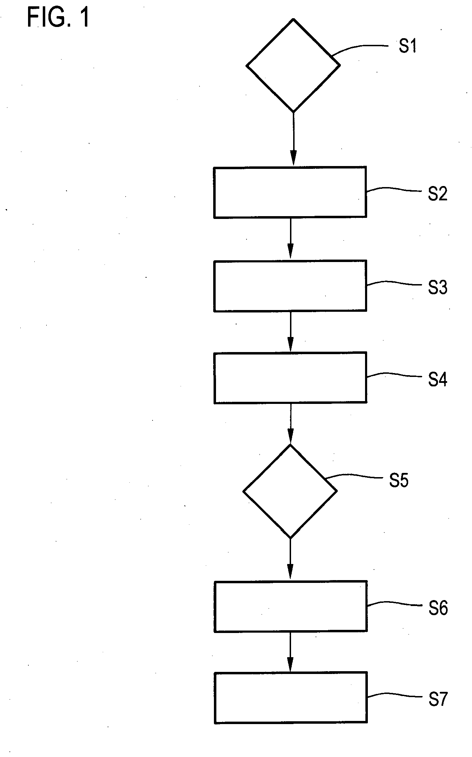

Fig. 1 zeigt einen Ablaufplan eines Ausführungsbeispiels des erfindungsgemäßen Verfahrens. Dieses betrifft die Überprüfung der Kalibrierung und gegebenenfalls Rekalibrierung von verschiedenen Umgebungssensoren eines Kraftfahrzeugs, die wenigstens teilweise überlappende Erfassungsbereiche aufweisen, mithin wenigstens teilweise Sensordaten des gleichen Merkmals in der Umgebung des Kraftfahrzeugs vermessen. Insbesondere vermessen die Umgebungssensoren in ihren Sensordaten die Position des Merkmals, welche als Positionsdaten in den Sensordaten enthalten ist.

In einem Schritt S1 wird überprüft, ob ein Betriebskriterium erfüllt ist, um das Ausführungsbeispiel des erfindungsgemäßen Verfahrens zu starten. Als Betriebskriterium wird vorliegend das Abschließen des Kraftfahrzeugs bei stehendem Motor verwendet, wobei auch andere Betriebskriterien denkbar sind. Ist das Betriebskriterium erfüllt, werden in einem Schritt S2 bei stehendem Kraftfahrzeug Sensordaten der Umgebung des Kraftfahrzeugs mit den Umgebungssensoren aufgenommen, wobei bei einer Bewegung des Kraftfahrzeugs benötigendem Umgebungssensoren die zuletzt aufgenommenen Sensordaten vor dem Stillstand des Kraftfahrzeugs abgespeichert wurden, beispielsweise in einem Ringpuffer, und dort nun abgerufen werden können.

In einem Schritt S3 werden Merkmale der Umgebung gesucht, deren Positionsdaten in allen oder zumindest mehreren Sensordaten unterschiedlicher Umgebungssensoren ermittelbar sind. Dabei ist zu beachten, dass die Koordinatensysteme der einzelnen Umgebungssensoren leicht miteinander registriert werden können, da für alle Umgebungssensoren die im Rahmen der letzten Kalibrierung aufgenommenen extrinsischen Kalibrierungsparameter, die die Verbauposition im Kraftfahrzeug beschreiben, ja vorliegen; diese extrinsischen Kalibrierungsparameter sind es auch, die im Rahmen des vorliegenden Verfahrens überprüft und gegebenenfalls korrigiert werden sollen.

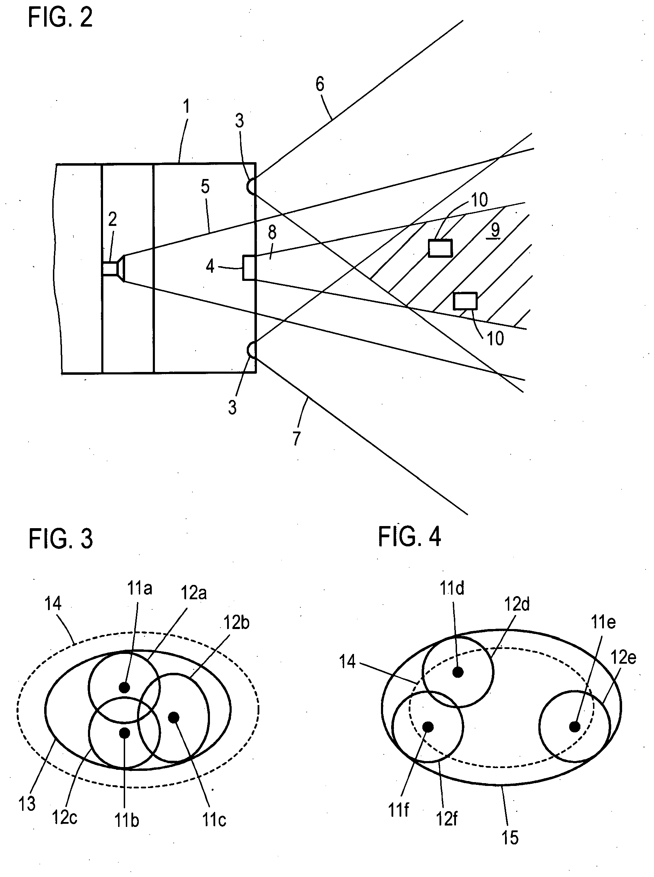

Zur näheren Erläuterung dieser Zusammenhänge ist in Fig. 2 der vordere Teil eines erfindungsgemäßen Kraftfahrzeugs 1 gezeigt, in dem hinter einer Windschutzscheibe eine Time-of-Flight-Kamera 2 verbaut ist, wobei als weitere Umgebungssensoren zwei Radarsensoren 3 und ein Ultraschallsensor 4 gezeigt sind. Das Kraftfahrzeug 1 kann auch weitere Umgebungssensoren aufweisen, die vorliegend der Einfachheit halber nicht gezeigt sind. Angedeutet sind ferner die Erfassungsbereiche, konkret der Erfassungsbereich 5 der Kamera 2, die Erfassungsbereiche 6 und 7 der Radarsensoren 3 und der Erfassungsbereich 8 des Ultraschallsensors 4. Ersichtlich existieren zwischen verschiedenen Erfassungsbereichen 5 bis 8 Überlappungsbereiche, das bedeutet, die Überlappungsbereiche werden von wenigstens zwei Umgebungssensoren erfasst, was folglich auch für in den Überlappungsbereichen liegende Merkmale der Umgebung, beispielsweise Kanten/Ecken von Objekten und dergleichen, gilt. Angedeutet ist dies für den Überlappungsbereich 9, in dem sogar die Erfassungsbereiche 5 bis 8 aller Umgebungssensoren 2 bis 4 überlappen. Liegen in diesem Überlappungsbereich 9 nun Merkmale 10 vor, existieren konsequenterweise für diese Merkmale 10 Sensordaten, hier konkret Positionsdaten, von der Kamera 2, den Radarsensoren 3 und dem Ultraschallsensor 4.

Solche Merkmale, deren Positionsdaten als Sensordaten von verschiedenen, also wenigstens zwei, Umgebungssensoren erfasst wurden, werden im Schritt S3 als Kandidatenmerkmale registriert und ausgewählt, wobei an die Kandidatenmerkmale selbstverständlich auch weitere Auswahlbedingungen gestellt werden können, beispielsweise ihre klare Unterscheidbarkeit in den Sensordaten und dergleichen.

Ebenso im Schritt S3 werden die Positionsdaten, die in den Sensordaten enthalten sind, für diese ausgewählten Merkmale, beispielsweise die Merkmale 10, für alle Umgebungssensoren in eine Umgebungskarte eingetragen. Nachdem die Umgebungssensoren auch einen Messfehler als Fehlerabschätzung mitliefern, ergeben sich in der Umgebungskarte für jedes Merkmal kleine Bereiche im Ortsraum, deren Ausdehnung um den eigentlichen Messwert für die Position durch die Messfehler bestimmt wird.

Auf Grundlage dieser Umgebungskarte werden in Schritt S4 die in die Umgebungskarte eingetragenen Sensordaten, also die Positionsdaten, durch jeweils ein Dekalibrierungskriterium ausgewertet. Im vorliegenden Ausführungsbeispiel wird für jedes betrachtete Merkmal ein bestimmtes Dekalibrierungskriterium ausgewertet, das durch Fig. 3 und Fig. 4 näher erläutert sei. Fig. 3 zeigt für den kalibrierten Fall einen Ausschnitt der Umgebungskarte, mithin einen Teil des hier zweidimensionalen Ortsraums als Parameterraum. Die von den einzelnen Umgebungssensoren, hier drei Umgebungssensoren, erfassten Positionsdaten sind jeweils als Messwerte 11a, 11b und 11c mit einer zugehörigen Fehlerellipse 12a, 12b und 12c gezeigt. Im Dekalibrierungskriterium wird nun die kleinstmögliche Umgebung 13 in Form einer Ellipse gesucht, die die Messwerte 11 samt ihren Fehlerellipsen 12 umgibt. Die Umgebung 13 beschreibt daher, wie stark die Positionsdaten der einzelnen Umgebungssensoren voneinander abweichen, ist mithin eine Art des Vergleichs der einzelnen Positionsdaten, nachdem die Größe der Umgebung 13 davon abhängt, wie stark die Positionsdaten voneinander abweichen. Im Fall der Fig. 3 liegen die Messwerte 11 ersichtlich sehr dicht beieinander, so dass ihre Fehlerellipsen 12 jeweils überlappen und die Umgebung 13 klein ist, insbesondere kleiner als eine Referenzumgebung 14, die in ihren Ausdehnungsgrößen (hier lange und kurze Achsen) abhängig von den Messfehlern bestimmt wurde, um anzugeben, bis wann von einer korrekten Kalibrierung ausgegangen werden kann.

Fig. 4 zeigt einen Fall, in dem die Messwerte 11d, 11e und 11f mit ihren jeweiligen Fehlerellipsen 12d, 12e und 12f stärker voneinander abweichen, insbesondere was den Messwert 11e angeht. Dies führt dazu, dass die kleinste die Fehlerellipsen 12d, 12e und 12f umschreibende Umgebung 15, wiederum eine Ellipse, größer ist als die Referenzumgebung 14, im vorliegenden Fall sogar in beiden Ausdehnungsgrößen. Dies ist ein deutlicher Hinweis auf eine Dekalibrierung: das Dekalibrierungskriterium liefert hier also als Ergebnis "dekalibriert". Dabei sei noch darauf hingewiesen, dass bereits an dieser Stelle Analysen vorgenommen werden können, welcher Umgebungssensor voraussichtlich dekalibriert ist, beispielsweise, indem die Umgebungen für die Messwerte 11 jeweils mit einem Messwert weniger betrachtet werden und beobachtet wird, der Wegfall welches Messwertes wieder zu einer innerhalb der Referenzumgebung 14 liegenden Umgebung führt, so dass eine Art Ausreißerdetektion gegeben ist. Im Fall der Fig. 4 würde festgestellt werden, dass mit hoher Wahrscheinlich der Umgebungssensor, der für den Messwert 11e verantwortlich ist, dekalibriert sein könnte. Es sind selbstverständlich auch andere Methoden denkbar, bereits bei der Auswertung eines Dekalibrierungskriteriums Schlüsse darauf zu ziehen, welcher Sensor dekalibriert sein könnte.

Zunächst sei jedoch darauf hingewiesen, dass selbstverständlich auch andere Varianten von Dekalibrierungskriterien existieren, wobei auch ein Dekalibrierungskriterium verwendet werden kann, das Abstandsmaße zwischen jeweils Paaren von Positionsdaten/Messwerten 11 bestimmt und diese mit einem jeweils von den Messfehlern abhängigen Schwellwert vergleicht, wobei auch dann eine Analyse durchgeführt werden kann, welcher Umgebungssensor dekalibriert sein könnte.

Diese Analyse, welcher Umgebungssensor dekalibriert sein könnte, kann auch weiter durch Zusammenschau der Ergebnisse verschiedener Dekalibrierungskriterien für verschiedene Merkmale erfolgen.

Um kurzzeitige, vorübergehende Störungen nicht als Dekalibrierung aufzufassen, kann auch vorgesehen sein, Sensordaten zu mehreren Zeitpunkten aufzunehmen und die Schritte S2 bis S4 entsprechend zu wiederholen.

In einem Schritt S5, vergleiche wiederum Fig. 1, wird dann überprüft, ob eine Dekalibrierung tatsächlich vorliegt, wobei bevorzugt eine statistische Betrachtung über mehrere Dekalibrierungskriterien erfolgt, beispielsweise eine Dekalibrierung erkannt wird, falls alle oder ein bestimmter Anteil von einen mögicherweise dekalibrierten Umgebungssensor betreffenden Dekalibrierungskriterien als "dekalibriert" anzeigend ausgewertet wurden und/oder allgemein eine bestimmte Anzahl und/oder ein bestimmter Anteil der Dekalibrierungskriterien als "dekalibriert" ausgewertet wurde. Wird keine Dekalibrierung festgestellt, wird gemäß dem Pfeil 16 auf das nächste Eintreten des Betriebskriteriums im Schritt S1 gewartet.

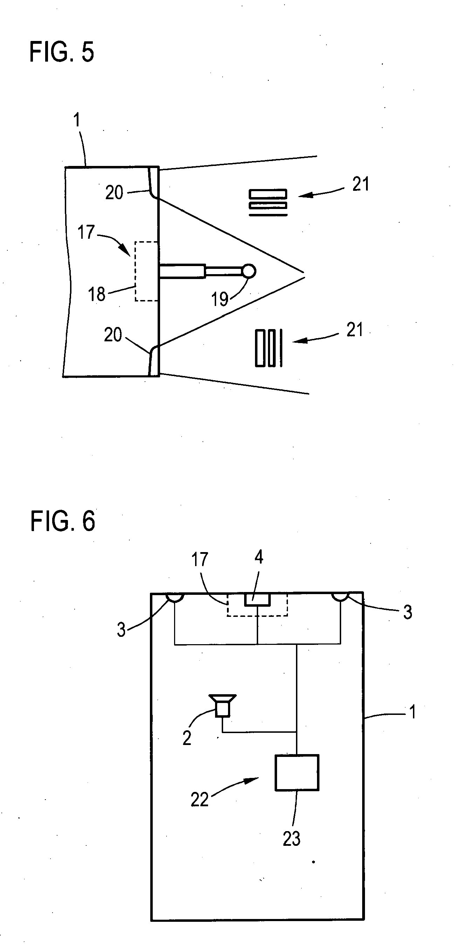

Wird jedoch eine Dekalibrierung festgestellt, wird zunächst in einem Schritt S6 eine Hinweisinformation an den Fahrer ausgegeben; gleichzeitig wird ein Eintrag in einen Fehlerspeicher geschrieben, der auf diese zum aktuellen Zeitpunkt vorliegende Dekalibrierung hinweist. In einem Schritt S7 erfolgt dann eine Rekalibrierung wenigstens der als dekalibriert bestimmten Umgebungssensoren mittels einer gemäß Fig. 5 erläuterten fahrzeugseitigen Rekalibrierungseinrichtung 17, die vorliegend mehrere Komponenten aufweist. Zum einen umfasst die Dekalibrierungseinrichtung 17 ein über eine Teleskopeinheit 18 ausfahrbares Referenzobjekt 19, welches von Umgebungssensoren erfasst werden kann. Das Referenzobjekt 19 befindet sich normalerweise versteckt im Kraftfahrzeug, kann jedoch zur Rekalibrierung ausgefahren werden. Ferner können über die Rekalibrierungseinrichtung 17 die Scheinwerfer 20 des Kraftfahrzeugs 1 angesteuert werden, Rekalibrierungsmuster 21 als Lichtmuster auf die Fahrbahn bzw. Straße vor dem Kraftfahrzeug zu projizieren, die von optischen Umgebungssensoren erfasst werden können. Dabei ist gegebenenfalls zu berücksichtigen, ob sich der Grund, auf dem das Kraftfahrzeug 1 steht, eben fortsetzt, was beispielsweise aus einem Umgebungsmodell oder dergleichen abgeleitet werden kann.

Die Rekalibierungsmuster 21 und das Referenzobjekt 19 stehen in fester geometrischer Beziehung zu dem Kraftfahrzeug 1, so dass dann, wenn die jeweiligen derart erzeugten Merkmale erfasst wurden, aktualisierte extrinsische Kalibrierungsparameter für wenigstens die dekalibrierten Umgebungssensoren ermittelt und ab nun im Kraftfahrzeug 1 verwendet werden können. Die extrinsischen Kalibrierungsparameter können dabei zentral hinterlegt werden, so dass alle Auswerteeinheiten, die diese zur Auswertung der Sensordaten benötigen, auf sie zugreifen können.

Fig. 6 zeigt schließlich nochmals eine Prinzipskizze des erfindungsgemäßen Kraftfahrzeugs 1, wobei der Übersichtlichkeit halber wiederum nur ein Teil der Umgebungssensoren, nämlich die bezüglich Fig. 2 bereits diskutierten Umgebungssensoren, dargestellt sind. Die Rekalibierungseinrichtung 17 ist nur angedeutet; Auswertungseinheiten für die Sensordaten, die in den Sensoren selbst als auch als Teil von Fahrzeugsystemen in Steuergeräten vorgesehen sein können, sind ebenso der Übersichtlichkeit halber nicht gezeigt. Dargestellt jedoch ist die hier als Steuergerät 22 realisierte Steuereinheit 23, die zur Durchführung des erfindungsgemäßen Verfahrens ausgebildet ist.

## Patentansprüche

1. Verfahren zur Überwachung einer Kalibrierung mehrerer, Sensordaten aus der Umgebung eines Kraftfahrzeugs (1) aufnehmender, an einer durch extrinsische Kalibrierungsparameter beschriebenen Verbauposition im Kraftfahrzeug (1) verbauter Umgebungssensoren bezüglich der extrinsischen Kalibrierungsparameter, wobei zur Ermittlung einer Dekalibrierung wenigstens eines Umgebungssensors dasselbe Merkmal (10) der Umgebung in derselben Eigenschaft beschreibende Sensordaten unterschiedlicher Umgebungssensoren durch wenigstens ein die Sensordaten vergleichendes Dekalibrierungskriterium ausgewertet werden, wobei durch das Dekalibrierungskriterium in den Sensordaten enthaltene Positionsdaten des Merkmals (10) verglichen werden und durch das Dekalibrierungskriterium überprüft wird, ob die Sensordaten aller ein Merkmal (10) erfassender Umgebungssensoren innerhalb einer durch wenigstens eine Ausdehnungsgröße, die von den jeweiligen Sensordaten zugeordneten Messfehlern abhängig ist, beschriebenen Referenzumgebung (14) im Parameterraum liegen.

2. Verfahren nach Anspruch 1,
**dadurch gekennzeichnet,**
**dass** Merkmale (10) der Umgebung mit ihren gemäß den Sensordaten gemessenen Positionsdaten in eine Umgebungskarte eingetragen werden, die durch das Dekalibrierungskriterium ausgewertet wird.

3. Verfahren nach einem der vorangehenden Ansprüche,
**dadurch gekennzeichnet,**
**dass** durch das Dekalibrierungskriterium ein Abstandsmaß zwischen den Sensordaten zweier Umgebungssensoren für alle Paare von ein Merkmal (10) erfassenden Umgebungssensoren ermittelt und mit einem insbesondere von den Sensordaten zugeordneten Messfehlern abhängigen Schwellwert verglichen wird.

4. Verfahren nach einem der vorangehenden Ansprüche,
**dadurch gekennzeichnet,**
**dass** bei stehendem Kraftfahrzeug (1) im Stand aufgenommene Sensordaten und/oder für eine Bewegung des Kraftfahrzeugs (1) benötigende Umgebungssensoren unmittelbar vor dem Stand aufgenommene Sensordaten ausgewertet werden und/oder bei einem bewegten Kraftfahrzeug (1) gleichzeitig aufgenommene Sensordaten ausgewertet werden.

5. Verfahren nach einem der vorangehenden Ansprüche,
**dadurch gekennzeichnet,**
**dass** das Dekalibrierungskriterium für mehrere Zeitpunkte in einem insbesondere gleitenden Zeitfenster ausgewertet wird und zur Überwachung der Kalibrierung die zu den verschiedenen Zeitpunkten erhaltenen Dekalibrierungsinformationen der Dekalibrierungskriterien statistisch ausgewertet werden, insbesondere bei einer einen Schwellwert übersteigenden Anzahl von eine Dekalibrierung anzeigenden Dekalibrierungskriterien eine Dekalibrierung festgestellt wird.

6. Verfahren nach einem der vorangehenden Ansprüche,
**dadurch gekennzeichnet,**
**dass** die Überprüfung auf Dekalibrierung bei Eintritt eines bestimmten Betriebskriteriums des Kraftfahrzeugs (1) durchgeführt wird.

7. Verfahren nach Anspruch 6,
**dadurch gekennzeichnet,**
**dass** als Betriebskriterium das Abschließen des Kraftfahrzeugs (1) bei ausgeschaltetem Motor verwendet wird.

8. Verfahren nach einem der vorangehenden Ansprüche,
**dadurch gekennzeichnet,**
**dass** durch gemeinsame Auswertung einzelner Vergleiche des Dekalibrierungskriteriums und/oder eine Ausreißerdetektion und/oder durch Vergleich über mehrere Dekalibrierungskriterien ein dekalibrierter Umgebungssensor identifiziert wird.

9. Verfahren nach einem der vorangehenden Ansprüche,
**dadurch gekennzeichnet,**
**dass** bei Ermittlung einer Dekalibrierung wenigstens eines Umgebungssensors eine Hinweisinformation an einen Fahrer ausgegeben wird und/oder eine Rekalibrierung durch Ermittlung aktueller extrinsischer Kalibrierungsparameter durchgeführt wird.

10. Verfahren nach Anspruch 9,
**dadurch gekennzeichnet,**
**dass** die Rekalibrierung mittels einer Rekalibrierungseinrichtung (17) durchgeführt wird, die wenigstens ein durch die zu rekalibrierenden Umgebungssensoren erfassbares Merkmal, das in fester geometrischer Beziehung zu dem Kraftfahrzeug (1) steht, erzeugt und/oder zur Verfügung stellt.

11. Verfahren nach Anspruch 10,
**dadurch gekennzeichnet,**
**dass** durch die Rekalibrierungseinrichtung (17) ein detektierbares Objekt (19), insbesondere mittels eines Teleskopträgers (18), aus dem Kraftfahrzeug (1) ausgefahren wird und/oder bei optischen Umgebungssensoren ein Rekalibrierungsmuster (21) auf die Straße projiziert wird und/oder eine ein fest am Kraftfahrzeug (1) angeordnetes, durch wenigstens einen Teil der zu rekalibrierenden Umgebungssensoren erfassbares Merkmal aufweisende Rekalibrierungseinrichtung (17) verwendet wird.

12. Verfahren nach einem der vorangehenden Ansprüche,
**dadurch gekennzeichnet,**
**dass** als Umgebungssensoren wenigstens ein Ultraschallsensor (4) und/oder wenigstens ein Radarsensor (3) und/oder wenigstens ein Lasersensor und/oder wenigstens eine Kamera (2) und/oder wenigstens ein PMD-Sensor verwendet werden.

13. Kraftfahrzeug (1) mit mehreren, Sensordaten aus der Umgebung des Kraftfahrzeugs (1) aufnehmenden, an einer durch extrinsische Kalibrierungsparameter beschriebenen Verbauposition im Kraftfahrzeug (1) verbauten Umgebungssensoren und wenigstens einer wenigstens einem Umgebungssensor zugeordnete, die Sensordaten des wenigstens einen zugeordneten Umgebungssensors unter Nutzung der Kalibrierungsparameter auswertenden Auswerteeinheit,
**dadurch gekennzeichnet,**
**dass** das Kraftfahrzeug eine Steuereinheit (23) aufweist, die zur Ermittlung einer Dekalibrierung wenigstens eines Umgebungssensors hinsichtlich der extrinsischen Kalibrierungsparameter aus einem Vergleich von dasselbe Merkmal (10) der Umgebung beschreibenden Sensordaten unterschiedlicher Umgebungssensoren ausgebildet ist, wobei die Steuereinheit (22) zur Durchführung eines Verfahrens nach einem der Ansprüche 1 bis 12 ausgebildet ist.

## Claims

1. Method for monitoring a calibration of a plurality of environment sensors relative to extrinsic calibration parameters, which environment sensors record sensor data from the environment of a motor vehicle (1) and are installed in an installation position in the motor vehicle (1) described by extrinsic calibration parameters, wherein for detecting a decalibration of at least one environment sensor, sensor data from different environment sensors describing the same feature (10) of the environment in the same capacity are evaluated by at least one decalibration criterion comparing the sensor data, wherein by means of the decalibration criterion, position data of the feature (10) contained in the sensor data are compared and by means of the decalibration criterion a check is performed to see whether the sensor data of all environment sensors detecting a feature (10) are within a reference environment (14) in the parameter range described by at least one expansion variable, which is dependent on measurement errors assigned to the respective sensor data.

2. Method according to claim 1,
**characterised in**
**that** features (10) of the environment with their position data measured according to the sensor data are entered into an environment map which is evaluated by the decalibration criterion.

3. Method according to any of the preceding claims,
**characterised in**
**that** by means of the decalibration criterion a distance measurement between the sensor data of two environment sensors for all pairs of environment sensors detecting a feature (10) is determined and compared with a threshold value dependent in particular on measurement errors assigned to the sensor data.

4. Method according to any of the preceding claims,
**characterised in**
**that** with a stationary motor vehicle (1) sensor data recorded when stationary and/or sensor data recorded directly before the vehicle is stationary for environment sensors requiring movement of the motor vehicle (1) are evaluated and/or sensor data recorded simultaneously in a moving vehicle (1) are evaluated.

5. Method according to any of the preceding claims,
**characterised in**
**that** the decalibration criterion is evaluated for a plurality of time points in particular in a sliding time window and the decalibration information of the decalibration criteria obtained at the different time points are evaluated statistically for monitoring the calibration, in particular a decalibration is established with a number of decalibration criteria displaying decalibration that exceeds a threshold value.

6. Method according to any of the preceding claims,
**characterised in**
**that** the check for decalibration is performed in the event of a specific operating criterion of the motor vehicle (1).

7. Method according to claim 6,
**characterised in**
**that** the locking of the motor vehicle (1) with a switched off motor is used as an operating criterion.

8. Method according to any of the preceding claims,
**characterised in**
**that** a decalibrated environment sensor is identified by means of a joint evaluation of individual comparisons of the decalibration criterion and/or an outlier detection and/or by comparison of a plurality of decalibration criteria.

9. Method according to any of the preceding claims,
**characterised in**
**that** if a decalibration of at least one environmental sensor is detected, information is output to a driver and/or a recalibration is performed by determining current extrinsic calibration parameters.

10. Method according to claim 9,
**characterised in**
**that** the recalibration is performed by means of a recalibration device (17), which produces and/or provides at least one feature detectable by the environment sensors to be recalibrated which is in a defined geometric relationship to the motor vehicle (1).

11. Method according to claim 10,
**characterised in**
**that** by means of the recalibration device (17) a detectable object (19), in particular by means of a telescopic extension (18), is extended from the motor vehicle (1) and/or with optical environment sensors a recalibration pattern (21) is projected onto the road and/or a recalibration device (17) is used having a feature which is arranged securely on the motor vehicle (1) and detectable by at least a portion of the environment sensors to be recalibrated.

12. Method according to any of the preceding claims,
**characterised in**
**that** as environment sensors at least one ultrasound sensor (4) and/or at least one radar sensor (3) and/or at least one laser sensor and/or at least one camera (2) and/or at least one PMD sensor are used.

13. Motor vehicle (1) having a plurality of environment sensors which record sensor data from the environment of the motor vehicle (1) and are installed in an installation positon in motor vehicle (1) described by extrinsic calibration parameters and at least one evaluation unit which is assigned to at least one environment sensor and evaluates the sensor data of the at least one assigned environment sensor using the calibration parameters,
**characterised in**
**that** the motor vehicle has a control unit (23) which is designed for determining a decalibration of at least one environment sensor with respect to the extrinsic calibration parameters from a comparison of the same feature (10) of sensor data of different environment sensors describing the environment, wherein the control unit (22) is configured for performing a method according to any of claims 1 to 12.

## Revendications

1. Procédé de surveillance d'un étalonnage de plusieurs capteurs d'environnement enregistrant des données de capteur de l'environnement d'un véhicule automobile (1), montés sur une position de montage dans le véhicule automobile (1) décrite par des paramètres d'étalonnage extrinsèques relatifs aux paramètres d'étalonnage extrinsèques, dans lequel pour déterminer un désétalonnage d'au moins un capteur d'environnement, des données de capteur de capteurs d'environnement différents décrivant la même caractéristique (10) de l'environnement dans la même propriété sont analysées par au moins un critère de désétalonnage comparant les données de capteur, dans lequel par le critère de désétalonnage, des données de position de la caractéristique (10) contenues dans les données de capteur sont comparées et par l'intermédiaire du critère de désétalonnage, on vérifie si les données de capteur de tous les capteurs d'environnement saisissant une caractéristique (10) se trouvent dans un environnement de référence (14) décrit par au moins une étendue qui dépend des erreurs de mesure affectées aux données de capteur respectives dans l'éventail de paramètres.

2. Procédé selon la revendication 1,
**caractérisé en ce**
**que** des caractéristiques (10) de l'environnement avec leurs données de position mesurées selon les données de capteur sont inscrites sur une carte d'environnement, qui est analysée par l'intermédiaire du critère de désétalonnage.

3. Procédé selon l'une quelconque des revendications précédentes,
**caractérisé en ce**
**que** par l'intermédiaire du critère de désétalonnage, un écart entre les données de capteur de deux capteurs d'environnement est déterminé pour toutes les paires de capteurs d'environnement saisissant une caractéristique (10) et est comparé à une valeur seuil dépendant en particulier des erreurs de mesure affectées aux données de capteur.

4. Procédé selon l'une quelconque des revendications précédentes,
**caractérisé en ce**
**que** lorsque le véhicule automobile est immobile (1), des données de capteurs enregistrées à l'arrêt et/ou des données de capteur enregistrées immédiatement avant l'arrêt des capteurs d'environnement nécessaires pour un mouvement du véhicule automobile (1) sont analysées et/ou dans le cas d'un véhicule automobile en mouvement (1) des données de capteurs enregistrées en même temps sont analysées.

5. Procédé selon l'une quelconque des revendications précédentes,
**caractérisé en ce**
**que** le critère de désétalonnage est analysé pour plusieurs laps de temps dans une fenêtre temporelle en particulier flottante et pour la surveillance de l'étalonnage, les informations de désétalonnage des critères de désétalonnage obtenues aux différents laps de temps sont analysées statistiquement, en particulier dans le cas d'un nombre de critères de désétalonnage indiquant un désétalonnage dépassant une valeur seuil, un désétalonnage est constaté.

6. Procédé selon l'une quelconque des revendications précédentes,
**caractérisé en ce**
**que** le contrôle de désétalonnage est effectué lors de la survenue d'un critère de fonctionnement déterminé du véhicule automobile (1).

7. Procédé selon la revendication 6,
**caractérisé en ce**
**que** l'on utilise comme critère de fonctionnement la fermeture du véhicule automobile (1) lorsque le moteur est éteint.

8. Procédé selon l'une quelconque des revendications précédentes,
**caractérisé en ce**
**qu'**un capteur d'environnement désétalonné est identifié par l'intermédiaire d'une analyse conjointe de comparaisons individuelles du critère de désétalonnage et/ou une détection de valeurs aberrantes et/ou par comparaison sur plusieurs critères de désétalonnage.

9. Procédé selon l'une quelconque des revendications précédentes,
**caractérisé en ce**
**que** lors de la détermination d'un désétalonnage d'au moins un capteur d'environnement, une information indicative est donnée à un conducteur et/ou un réétalonnage est réalisé par la détermination de paramètres d'étalonnage extrinsèques actuels.

10. Procédé selon la revendication 9,
**caractérisé en ce**
**que** le réétalonnage est réalisé au moyen d'un système de réétalonnage (17) qui génère et/ou met à disposition au moins une caractéristique pouvant être saisie par les capteurs d'environnement effectuant un réétalonnage qui est en rapport géométrique fixe avec le véhicule automobile (1).

11. Procédé selon la revendication 10,
**caractérisé en ce**
**que** par l'intermédiaire du système de réétalonnage (17), un objet détectable (19), en particulier au moyen d'un support télescopique (18) est sorti du véhicule automobile (1) et/ou dans le cas de capteurs d'environnement optiques, un modèle de réétalonnage (21) est projeté sur la rue et/ou un système de réétalonnage (17) disposé fixement sur le véhicule automobile (1), présentant une caractéristique pouvant être saisie par au moins une partie des capteurs d'environnement à réétalonner est utilisé.

12. Procédé selon l'une quelconque des revendications précédentes,
**caractérisé en ce**
**qu'**au moins un capteur à ultrasons (4) et/ou au moins un capteur radar (3) et/ou au moins un capteur laser et/ou au moins une caméra (2) et/ou au moins un capteur PMD sont utilisés comme capteurs d'environnement.

13. Véhicule automobile (1) comportant plusieurs capteurs d'environnement enregistrant des données de capteur de l'environnement du véhicule automobile (1), montés sur une position de montage dans le véhicule automobile (1) décrite par des paramètres d'étalonnage extrinsèques et au moins une unité d'analyse analysant les données de capteur de l'au moins un capteur d'environnement affecté, affectées à au moins un capteur d'environnement en utilisant les paramètres d'étalonnage,
**caractérisé en ce**
**que** le véhicule automobile présente une unité de commande (23) qui est conçue pour déterminer un désétalonnage d'au moins un capteur d'environnement pour ce qui concerne les paramètres d'étalonnage extrinsèques à partir d'une comparaison de données de capteur de capteurs d'environnement différents décrivant la même caractéristique (10) de l'environnement, dans lequel l'unité de commande (22) est conçue pour la réalisation d'un procédé selon l'une quelconque des revendications 1 à 12.
